# EUROPEAN PATENT APPLICATION

(11) **EP 2 105 477 A1**
(43) Date of publication of application: **30.09.2009**
(21) Application number: 09003741.7
(22) Date of filing: 16.03.2009
(51) Int. Cl.: C09D 11/00

(54) **Method of forming inkjet image**

(30) Priority: 24.03.2008 JP 2008076011
(71) Applicant: FUJIFILM Corporation, Minato-ku Tokyo (JP)
(72) Inventor: Wachi, Naotaka, Ashigarakami-gun Kanagawa (JP); Yabuki, Yoshiharu, Ashigarakami-gun Kanagawa (JP)
(74) Representative: HOFFMANN EITLE

(57) **Abstract**

The present invention provides a method of forming an inkjet image, the method comprising: providing an inkjet recording ink comprising a colorless water-soluble planar compound having ten or more delocalized pi-electrons in one molecule; impacting a first droplet of the inkjet recording ink on a surface of an image receiving material; impacting a second droplet of the inkjet recording ink, within 50 milliseconds after the first droplet on the recording ink impacts on the surface of the image receiving material, on a surface of the image receiving material at a location where the second and the first droplet contact each other.

## Description

### BACKGROUND

### Field of the Invention

The present invention relates to a method of forming an inkjet image.

### Related Art

The inkjet recording method has been rapidly spreading, and is still today developing, since the cost of materials is low, a high-speed recording is possible, inkjet printers have a low noise level, and further color images can be easily recorded. In the inkjet recording methods, there are a continuous system in which liquid droplets fly continuously, and an on-demand system in which liquid droplets fly in accordance with image information signals. As the method of ejecting ink droplets in the inkjet recording system, there are a method in which liquid droplets are ejected by pressure applied with a piezoelectric element, a method in which liquid droplets are ejected by air bubbles in ink generated with heat, a method of using ultrasonic wave, and a method of attracting and ejecting ink droplets with an electrostatic force. Further, as ink for inkjet methods, aqueous ink, oily ink or solid (molten type) ink is used.

It is required that dyes used for such an inkjet method have a high solubility in a solvent such as water, the capability of recording an image with a high density, a good color hue, a high fastness to light, heat and active gases (oxidizing gas such as NOx and ozone, and SO_{X}), a high fastness to water or chemicals, a high fixability to an image receiving material and a less ink bleed in an image receiving material, an excellent storability as ink, no toxicity and a high purity, and further availability with low cost.

In particular, dyes having fastness to light, humidity and heat, more specifically, the dyes which have fastness to oxidizing gasses such as ozone in the atmosphere when printing is performed on an image receiving material having an ink receiving layer containing porous white inorganic pigment particles, and have a high water-resistance are strongly demanded.

Dyes having such a high fastness to various environmental circumstances are disclosed (for example, see Japanese Patent Application Laid-Open (JP-A) Nos. 2007-77256 and 2007-23251).

Meanwhile, the inkjet system is often used when digital images taken with the use of a digital camera or a mobile phone with camera are printed. In order to increase the number of sheets to be processed per unit time, the recording time is shortened in such a manner that the frequency of ejecting ink is increased, and a high-density recording is performed with a number of ink ejecting nozzles.

However, the ink using such a dye having a high fastness as described in the above is often impermeable to an image receiving material. When a high speed recording is performed with an ink having less permeability, before an ink droplet which impacts on a recording medium permeates the recording medium, the subsequent ink droplet impacts on the adjacent location, so that the two ink droplets coalesce, resulting in worsening the image quality to be obtained noticeably. Hereinafter, the coalescence of such ink droplets is referred to as "bleeding and interference".

As a method of increasing the permeability of ink, for example, a method of reducing the surface tension of ink with an increase in the addition amount of a surfactant has been known to a person skilled in the art. However, the increase in the quantity of a surfactant beyond necessity is apt to generate bubbles in ink, resulting in worsening the ink ejecting property. Further, when the surface tension is reduced beyond necessity, ink tends to drip off from an ink nozzle, or the ink ejecting property is affected by the difficulty in forming a meniscus of the ink at the tip end of a nozzle, so that a large increase in quantity of a surfactant is difficult.

Furthermore, for example, a method of adding a specific water-soluble organic solvent such as 1,2-hexanediol, 2-pyrrolidone and triethyleneglycol monobutyl ether, to ink to increase the ink permeability has also been known to a person skilled in the art. However, it has been known that the composition of solvents in ink affects the ink ejecting property, the ink drying property on an ink nozzle, the storability of a formed image, and image bleed after the storage of the image under a highly humid condition, and the composition of solvents satisfying all the requirements has not yet been known at the present state.

On the other hand, although a phthalocyanine dye is used for cyan ink in many cases, it is known that when an image with a high optical density is recorded using a phthalocyanine dye with a high fastness, a so-called bronzing phenomenon, in which crystals of the dye deposit on the surface of a recording medium and the recorded image reflects light to give off a metallic luster as the recording medium is dried, is caused. This phenomenon tends to arise when the solubility of a dye in water is reduced, or a hydrogen bond-forming group is introduced into a dye structure for the purpose of improving the water-resistance, light fastness or gas resistance of the ink. The occurrence of the bronzing phenomenon causes the reflection and scatter of light, so that not only a decrease in the optical density of the recorded image, but also a large deviation of the color hue of the recorded image from the intended color hue arise, and further, the loss of clarity of the recorded image arise. Accordingly, prevention of the bronzing phenomenon is one of the important requirements for the inkjet system.

As a method of preventing of the bronzing phenomenon, a method of adding a naphthalene carboxylic acid derivative and a naphthalene sulfonic acid derivative to ink is disclosed (for example, refer to Japanese Patent No. 3903938).
Further, a method of adding to ink a colorless water-soluble planar compound having delocalized pi-electrons exceeding ten in one molecule is disclosed (for example, refer to JP-A No. 2005-05261).
However, the patent publications are silent with regard to the influence on the ink permeability when ink containing these additives is ejected at a high speed.

Accordingly, ink with a good permeability to image receiving materials without impairing the image storability is demanded.

### SUMMARY

The present invention has been made in view of the above circumstances and provides a method of forming an inkjet image.
A first aspect of the invention provides a method of forming an inkjet image, the method comprising: providing an inkjet recording ink comprising a colorless water-soluble planar compound having ten or more delocalized pi-electrons in one molecule; impacting a first droplet of the inkjet recording ink on a surface of an image receiving material; impacting a second droplet of the inkjet recording ink, within 50 milliseconds after the first droplet on the recording ink impacts on the surface of the image receiving material, on a surface of the image receiving material at a location where the second and the first droplet contact each other.

### DETAILED DESCRIPTION OF THE INVENTION

Hereinafter, the present invention will be described in detail.
The present invention provides a method of forming an inkjet image, in which, using an inkjet recording ink containing a colorless water-soluble planar compound having ten or more delocalized pi-electrons (π-electrons) in one molecule record, within 50 milliseconds after a first droplet of the inkjet recording ink impacts the surface of an image receiving material, a second droplet of the inkjet recording ink impacts the surface of the image receiving material at the location where the second droplet of the inkjet recording ink comes in adjacent contact with the first droplet of the inkjet recording ink.
With the above constituent features of the invention, it is possible to form an inkjet image which is excellent in color reproducibility, a sufficient fastness to light, heatand humidity, and an oxidizing gas in the atmosphere, and does not have bleeding and interference, in particular, remarkably at a high speed recording.

[Inkjet Recording Ink]

The inkjet recording ink used in the invention contains a colorless water-soluble planar compound having ten or more delocalized pi-electrons in one molecule (hereinafter, referred to as a "specific compound").

< Colorless Water-soluble Planar Compound having Ten or More Delocalized pi-electrons in One Molecule>
When the number of pi-electrons for forming delocalized pi-electrons electronic system increases, and the pi-electronic system spreads, the pi-electrons electronic system has an absorption in the visible region in many cases.
In the invention, the colorless state includes a state where an image may be colored very slightly to the extent that the image is not influenced by the coloration.
Although the specific compound in the invention may be a fluorescent compound, a compound which is not fluorescent is desirable, and the λmax at the most longest maximum absorption wavelength side is preferably 350 nm or less, and more preferably 320 nm, and a molar absorption coefficient is 10,000 or less.

The compound in the present invention has ten or more delocalized pi-electrons in one molecule. The number of pi-electrons is not specifically limited, but is preferably 80 or less, more preferably 50 or less, and still more preferably 30 or less.
Further, the ten or more delocalized pi-electrons may form one large delocalized pi-electron system, but may form two or more delocalized pi-electrons systems. In particular, a compound having at least two aromatic rings in one molecule is preferable.
The aromatic ring may be an aromatic hydrocarbon ring, may be an aromatic heterocyclic ring containing a hetero atom, or may be one aromatic ring formed by being ring-condensed.
Examples of the aromatic rings include benzene, naphthalene, anthracene, pyridine, pyrimidine, pyrazine and triazine.

The water-soluble planar compound of the invention is a compound which dissolves in an amount of preferably at least 1 g or more in 100 g of water at 20°C, more preferably 5 g or more, and most preferably 10 g or more in 100 g of water at 20°C.
In the case of a compound having two or more aromatic rings in a molecule, particularly at least two solubilizing groups bonded to the aromatic ring in the molecule are preferably contained in the compound. Useful solubilizing groups include a sulfo group, a carboxyl group, a hydroxyl group, a phosphono group, a carbonamide group, a sulfonamide group, a quaternary ammonium salt, and other groups which are apparent to a person skilled in the art, but are not limited to these groups. In particular, a sulfo group and a carboxyl group are preferable, and a sulfo group is most preferable.
Although the maximum number of the solubilizing groups in a molecule is limited only by the number of the positions of available substituent groups, the presence of ten solubilizing groups which are the same or different from each other will be sufficient in practical application. The counter cations of these solubilizing groups are not specifically restricted, but alkali metals, ammonium, organic cations (tetramethyl ammonium, guanidinium, pyridinium and the like) can be exemplified. Among them, alkali metals and ammonium are preferable, and lithium, sodium, potassium, ammonium are more preferable.
In particular, lithium, sodium and ammonium are still more preferable. From the viewpoint of imparting the solubility in water, lithium is most preferable, and from the viewpoint of cost, sodium is most preferable.

Specific examples, in addition to the compounds disclosed in JP-A No. 63-55544, include compounds disclosed in the official gazettes or specifications of JP-A Nos. 3-146947, 3-149543, 2001-201831, 2002-139822, 2002-196460, 2002-244257, 2002-244259, 2002-296743, 2002-296744, 2003-255502, 2003-307823, 2004-4500 and 2004-170964.

Among them, the specific compounds represented by the following formula 1 are preferably used:

A-X-L-(Y-B)ₙ Formula 1.

In the formula 1, A, L and B each independently represent an aromatic group (aryl group and aromatic heterocyclic group). X and Y each independently represent a divalent linking group. n represents 0 or 1. The aromatic group may be a single ring or may be a condensed ring The divalent linking group is an alkylene group, an alkenylene group, -CO-, -SOₙ- (n represents 0, 1 or 2), -NR-, (R represents a hydrogen atom, an alkyl group, an aryl group, a heterocyclic group), -O-, and a divalent group formed by combining these linking groups. However, the compound represented by the formula 1 contains at least one ionic hydrophilic group selected from the group consisting of a sulfo group, a carboxyl group, a phenolic hydroxyl group and a phosphono group. These ionic hydrophilic groups may be a salt form, and the counter cations for the ionic hydrophilic group are not specifically restricted, but an alkali metal, ammonium and an organic cation (tetramethyl ammonium, guanidium, pyridinium and the like) can be exemplified. Among them, alkali metals and ammonium are preferable, and lithium, sodium, potassium and ammonium are more preferable, in particular, lithium, sodium and ammonium are still more preferable, and lithium is most preferable.

Further, the compounds represented by the formula 1 may have a substituent other than the ionic hydrophilic groups, and specifically, examples of the substituent include an alkyl group, an aryl group, an aralkyl group, a heterocyclic group, an alkoxy group, an aryloxy group, a hydroxyl group, an amino group (including an anilino group and a heterocyclic amino group), an acyl group, an acylamino group, an ureido group, a halogen atom, a sulfamoyl group, a carbamoyl group, a sulfonamide group, a sulfonyl group, a sulphenyl group, a sulfinyl group, and the like, and these groups may further contain a substituent. Among the compounds represented by the formula 1, compounds represented by n = 1 are preferable, and at least one of A, L and B is preferably an aromatic heterocyclic ring. Furthermore, the compounds contain desirably from two to four ionic hydrophilic groups.

Although the action mechanism of the increase in the permeability of ink to the image receiving material by the compounds of the present invention is not clear, it is presumed that the permeability of ink is enhanced due to the forming of a complex by a pi-electron interaction between a dye molecule and the compounds. Accordingly, in order to exert the effect on a planar dye, especially such as phthalocyanine dye, it is important that the penetration promoting agent is planar and the pi-electron system is widely spread.
Moreover, it is also important that the penetration promoting agent has sufficient solubility so as not to separate out the penetration promoting agent itself or the complex formed by a dye and the penetration promoting agent. Although the number of required pi-electrons varies depending on the size of the dye molecule for the inkjet ink to be used, since the dye used for the inkjet ink has a widely spread planar structure as typified by direct dyes for increasing fixability, it is presumed that the penetration promoting agent is required to be a colorless water-soluble planar compound having a spread often or more delocalized pi-electrons in one molecule. Furthermore, the complex formed by the dye and the penetration promoting agent forms a structure for protecting the dye by the penetration promoting agent, so that the resistance of the dye to ozone gas can be improved.

Preferable examples of the compound used in the invention include compounds disclosed in the official gazettes or specifications of JP-A Nos. 2002-139822, 2002-196460, 2002-244257, 2002-244259, 2002-296743 and 2002-296744 as described in the above, and JP-A Nos. 2003-217318, 2006-249275 and 2006-249277. Representative compounds (penetration promoting agent) are shown below.

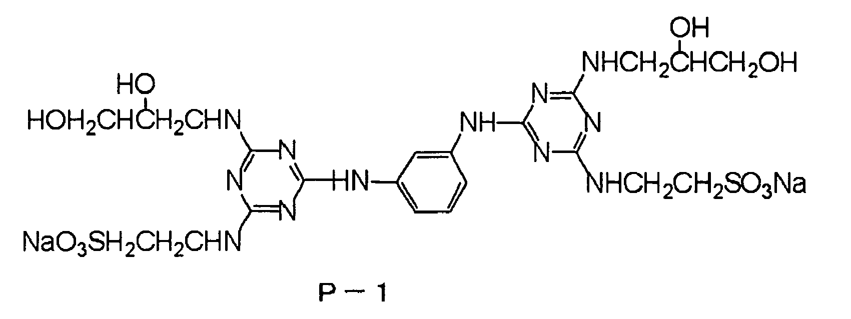

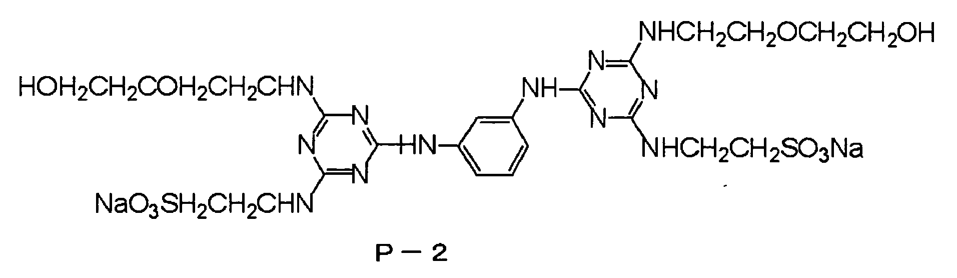

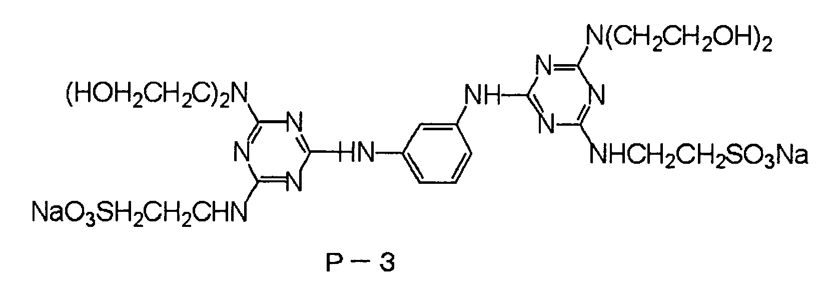

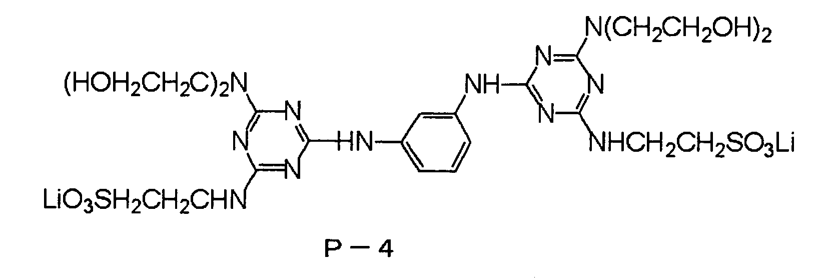

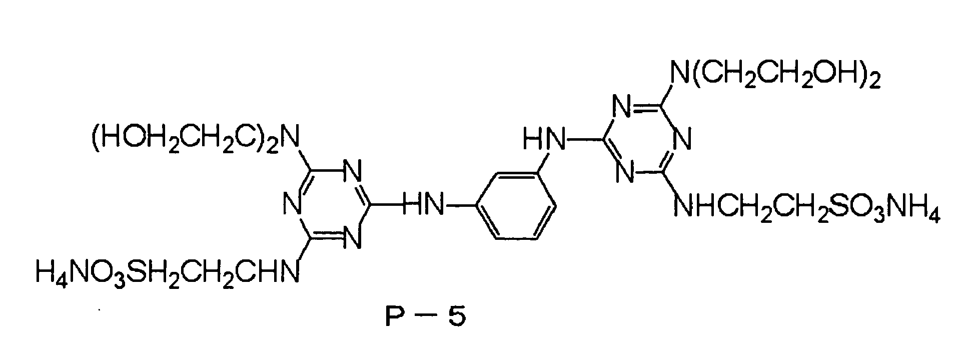

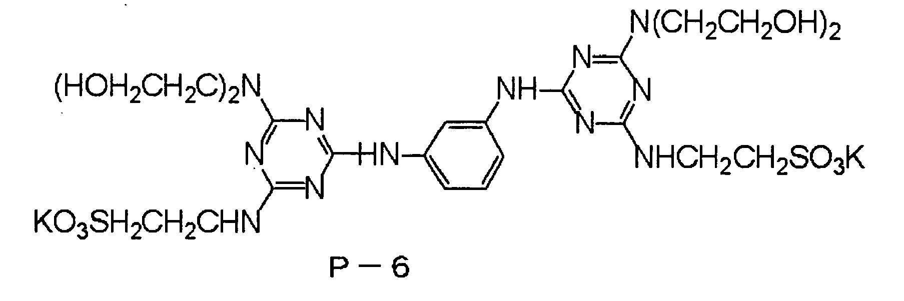

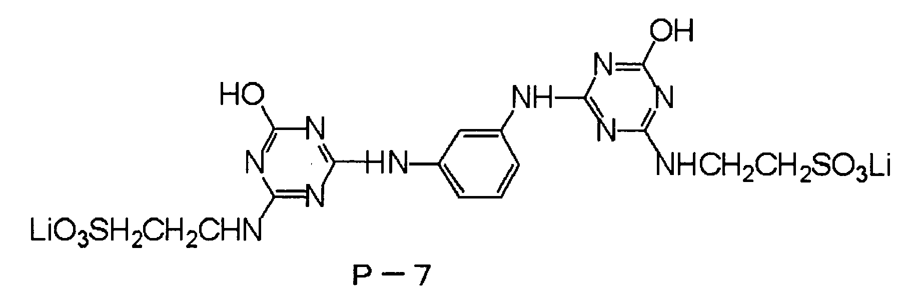

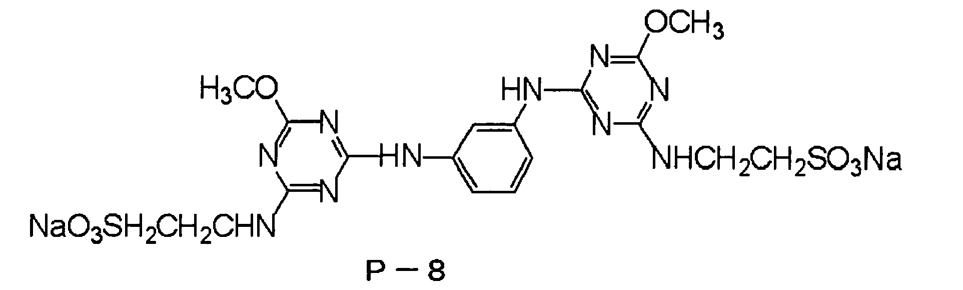

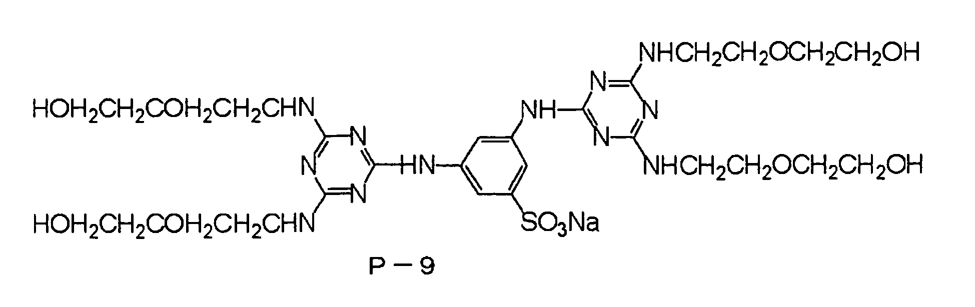

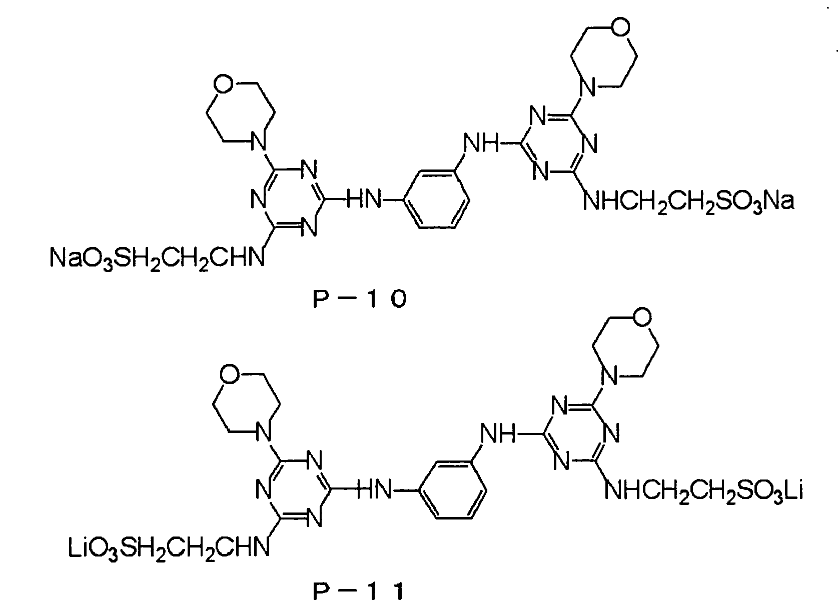

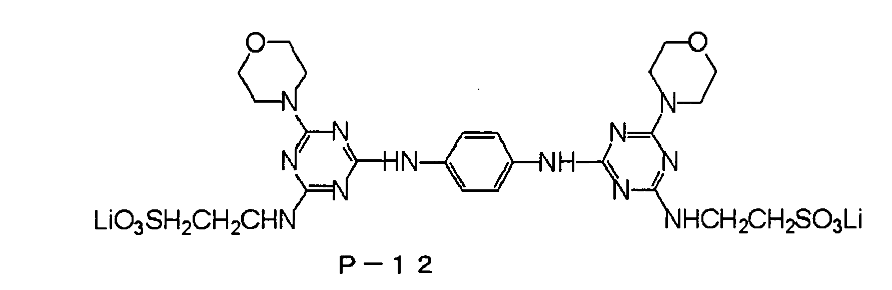

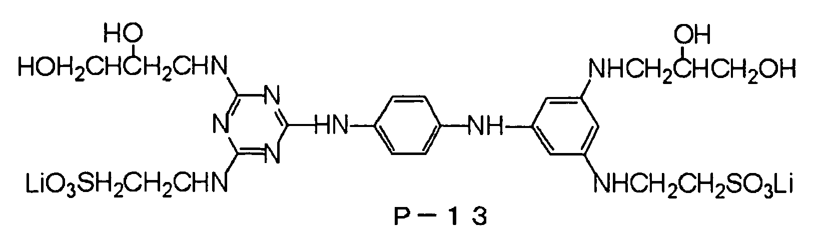

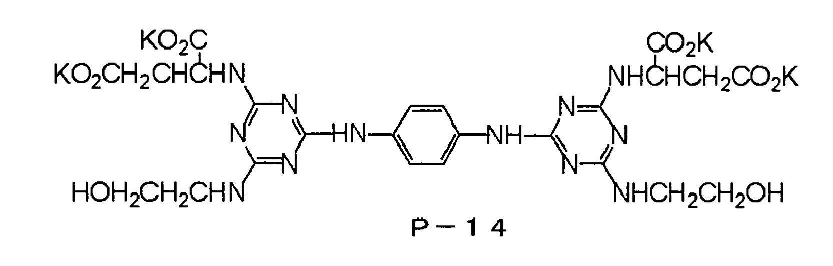

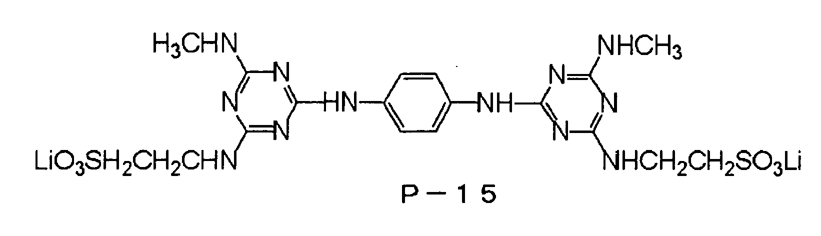

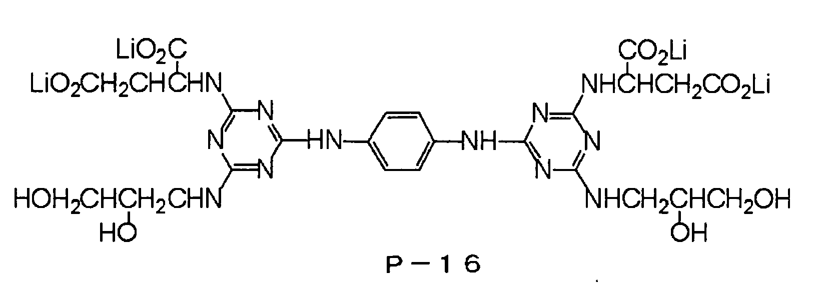

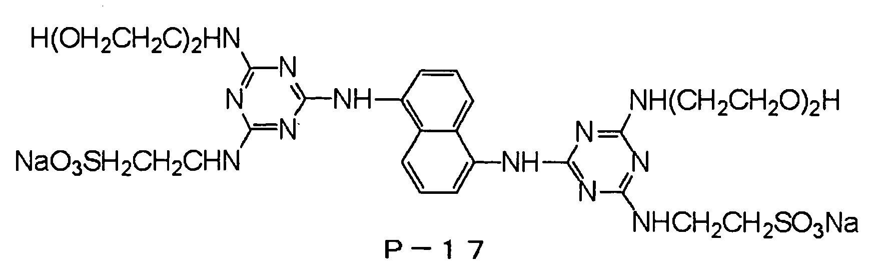

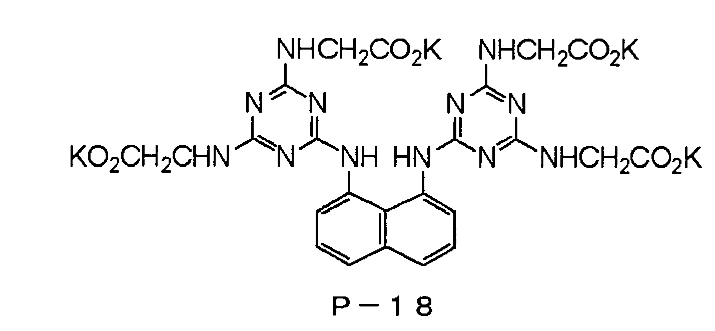

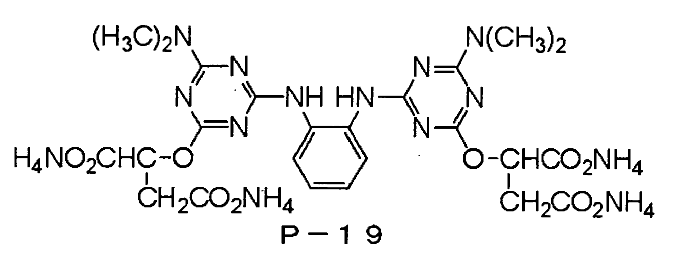

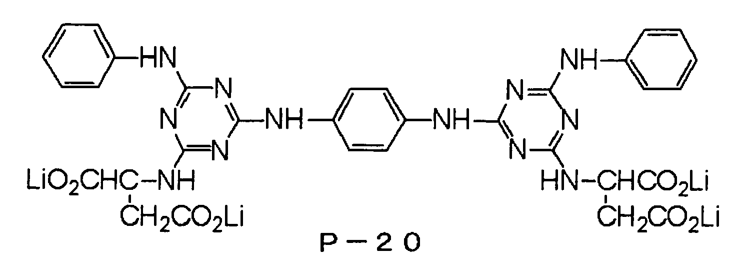

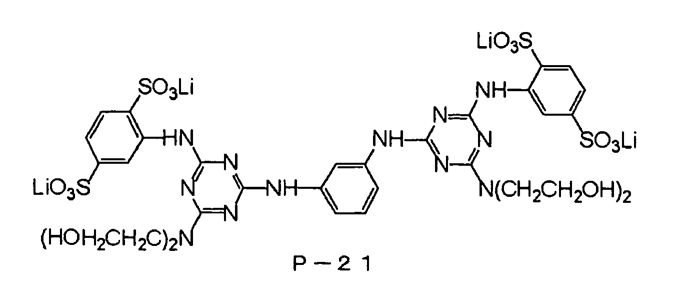

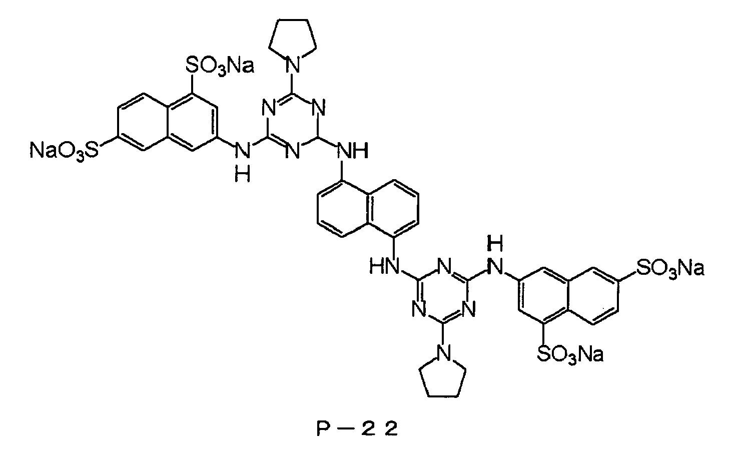

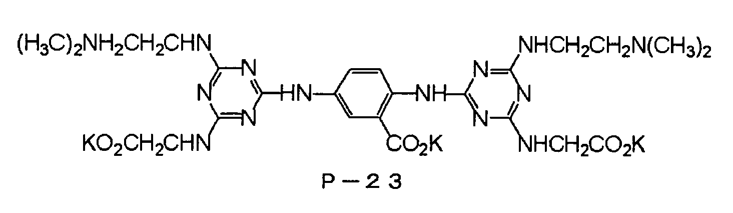

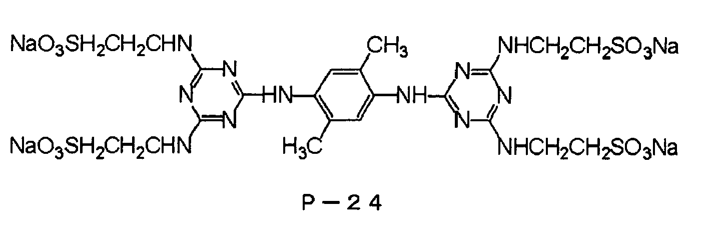

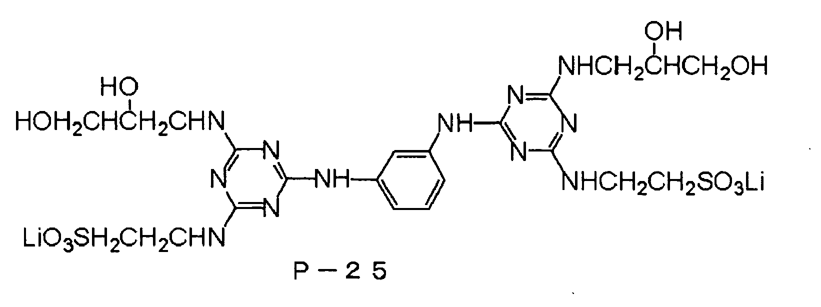

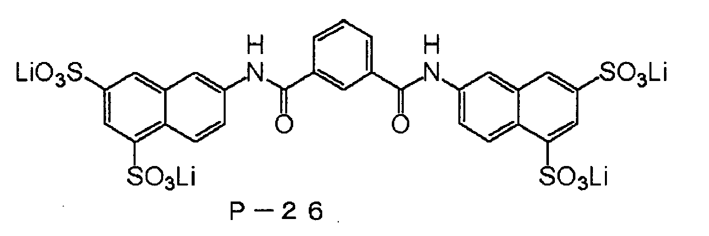

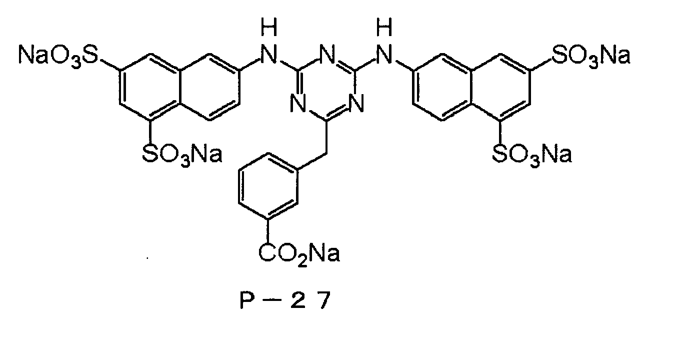

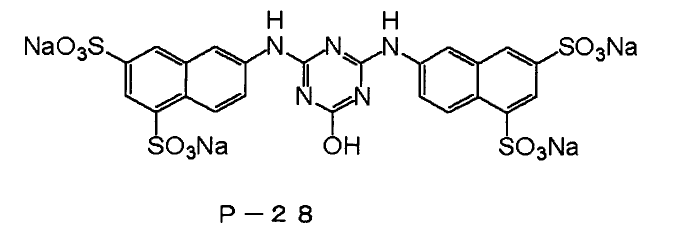

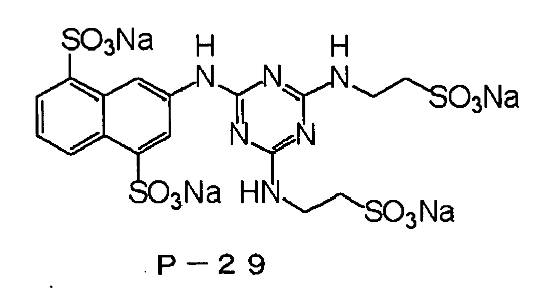

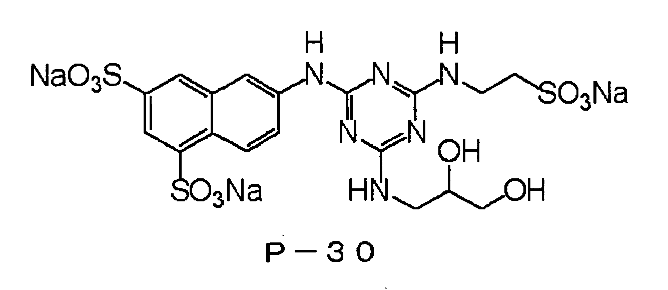

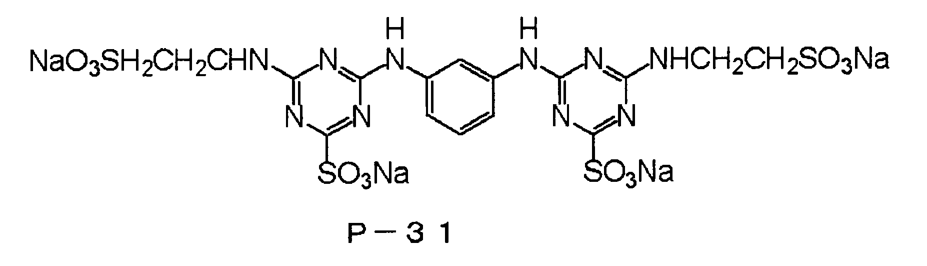

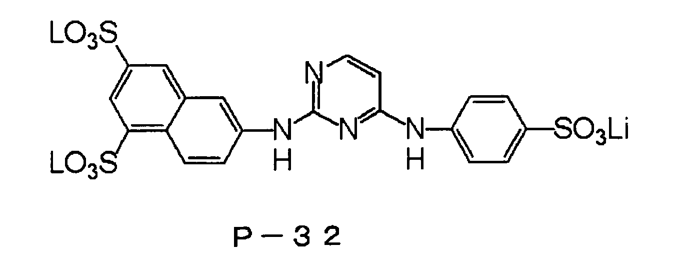

In addition to the above compounds, it is possible to use preferably potassium α-naphthoate, sodium α-naphthoate, lithium α-naphthoate, potassium β-naphthoate, sodium β-naphthoate, lithium β-naphthoate, potassium naphthalene-1,5-disulfonate, sodium naphthalene-1,5-disulfonate, lithium naphthalene-1,5-disulfonate, potassium naphthalene-2,6-disulfonate, sodium naphthalene-2,6-disulfonate, lithium naphthalene-2,6-disulfonate, potassium naphthalene-2,7-disulfonate, sodium naphthalene-2,7-disulfonate, lithium naphthalene-2,7-disulfonate, potassium naphthalene-1,3,6-tritrisulfonate, sodium naphthalene-1,3,6-trisulfonate, lithium naphthalene-1,3,6-trisulfonate, potassium naphthalene-1,4,6-trisulfonate, sodium naphthalene-1,4,6-trisulfonate, lithium naphthalene-1,4,6-trisulfonate, potassium naphthalene-1,2,6-trisulfonate, sodium naphthalene-1,2,6-trisulfonate, lithium naphthalene-1,2,6-trisulfonate, potassium naphthalene-1,3,5,7-tetrasulfonate, sodium naphthalene-1,3,5,7-tetrasulfonate, and lithium naphthalene-1,3,5,7-tetrasulfonate.

The desirable compounds of the invention can be easily synthesized with reference to the disclosures of JP-A No. 2002-139822 and the like in the above.

(Dye)

Any dyes can be used as the dyes in the ink of the invention. In particular, when the ink preferably contains one or more kinds of dyes selected from a phthalocyanine dye, an anthrapyridone dye, a monoazo dye, a disazo dye, a trisazo dye and a tetrakisazo dye, since the dyes are apt to form an associated state, and the dyes which are apt to be associated are less permeable to an image receiving layer, it is preferable to use the dyes together with the specific compound having the penetration promoting function.
Among them, since the fastness of a phthalocyanine dye, a disazo dye or a trisazo dye can be greatly improved by forming a complex with the specific compound, these dyes are preferably used together with the specific compound.
As desirable phthalocyanine dyes, the compounds represented by the following formula (C) can be exemplified.

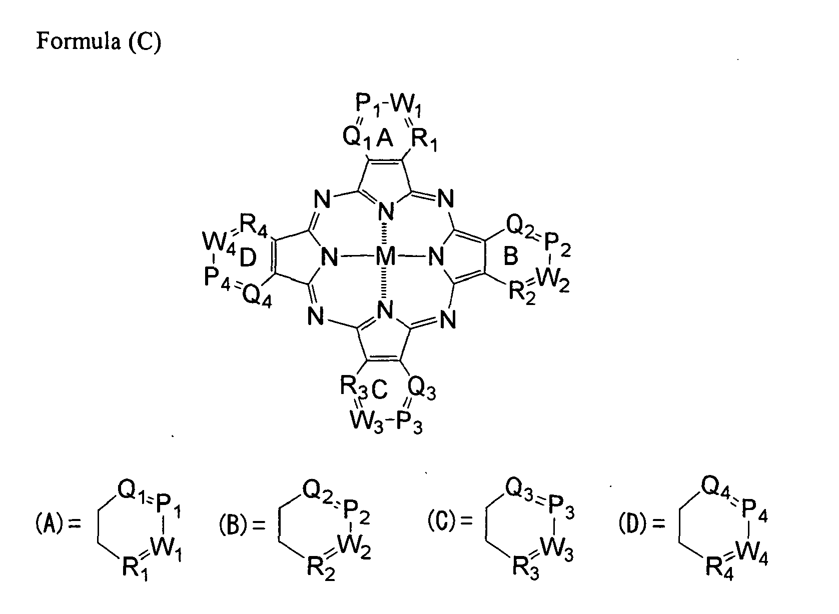

In the formula (C), Q₁ - Q₄, P₁ - P₄, W₁ - W₄, and R₁ - R₄, each independently represent (=C(J₁)- or -N=), (=C(J₂)- or -N=), (=C(J₃)- or -N=), and (=C(J₄)- or -N=). J₁ - J₄ each independently represent a hydrogen atom or a substituent. It is preferable that at least one of the four rings of a ring A, a ring B, a ring C and a ring D corresponding to a ring formed of (Q₁, P₁, W₁, R₁), a ring formed of (Q₂, P₂, W₂, R₂), a ring formed of (Q₃, P₃, W₃, R₃), and a ring formed of (Q₄, P₄, W₄, R₄), is an aromatic hydrocarbon ring, and it is more preferable that two or more rings of the four rings are aromatic hydrocarbon rings.
When any ring of the ring A, the ring B, the ring C and the ring D is a heterocyclic ring, the ring is desirably a pyridine ring or a pyrazine ring.
When J₁-J₄ are substituents, the substituents are preferably electron-attractive substituents, it is desirable that at least one of J₁-J₄, or at least one of substituents which J₁-J₄ have, has a substituent for imparting the solubility (an ionic hydrophilic group in the case that the dye is water-soluble, and a hydrophobic group in the case that the dye is oil-soluble). M represents a hydrogen atom, a metal element, a metal oxide, a metal hydroxide, or metal halide.
In the formula (C), when any of rings of the ring A, the ring B, the ring C and the ring D is an aromatic hydrocarbon ring, the aromatic hydrocarbon ring is preferably the compound represented by the following formula (C-1);

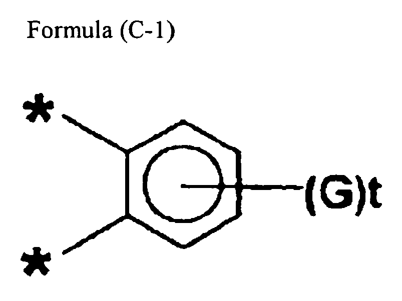

In the formula (C-1), * represents the bonding position with a phthalocyanine skeleton. G represents -SO-Z₁, -SO₂-Z₁, -SO₂NZ₁Z₂, -CONZ₁Z₂, -CO₂Z₁, -COZ₁, or a sulfo group. t represents an integer of 1 - 4. In the formula (C-1), G represents preferably -SO-Z₁, -SO₂-Z₁, -SO₂NZ₁Z₂, -CONZ₁Z₂, -CO₂Z₁ or -COZ₁, and G represents particularly preferably -SO-Z₁, -SO₂-Z₁ or -SO₂NZ₁Z₂, and G represents most preferably -SO₂-Z₁. t is preferably 1 or 2, and most preferably 1.
Z₁ may be the same or different from one another, and represents a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group. Z₁ represents preferably a substituted or unsubstituted alkyl group, a substituted or unsubstituted aryl group or a substituted or unsubstituted heterocyclic group, in particular, a substituted alkyl group, a substituted aryl group or a substituted heterocyclic group is preferable.
Z₂ may be the same or different from one another, and represents a hydrogen atom, a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group. Z₂ represents preferably a hydrogen atom, a substituted or unsubstituted alkyl group, a substituted or unsubstituted aryl group or a substituted or unsubstituted heterocyclic group, in particular, a hydrogen atom, a substituted alkyl group, a substituted aryl group or a substituted heterocyclic group is preferable.
In the formula (C), when any of rings of the ring A, the ring B, the ring C and the ring D is an aromatic hydrocarbon ring, at least one of the aromatic ring is particularly preferably the compound represented by the following formula (C-2).

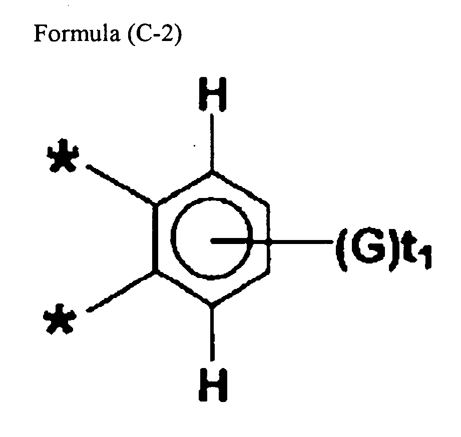

In the formula (C-2), * represents the bonding position with a phthalocyanine skeleton. G is synonymous with G in the formula (C-1), and preferable groups, particularly preferable groups and most preferable groups are the same as those of G in the formula (C-1). t₁ is preferably 1 or 2, and most preferably 1. Among them, it is desirable that all the aromatic hydrocarbon rings are represented by the formula (C-2).
In the phthalocyanine dyes, the phthalocyanine dye represented by the formula (C-3) is particularly preferable.

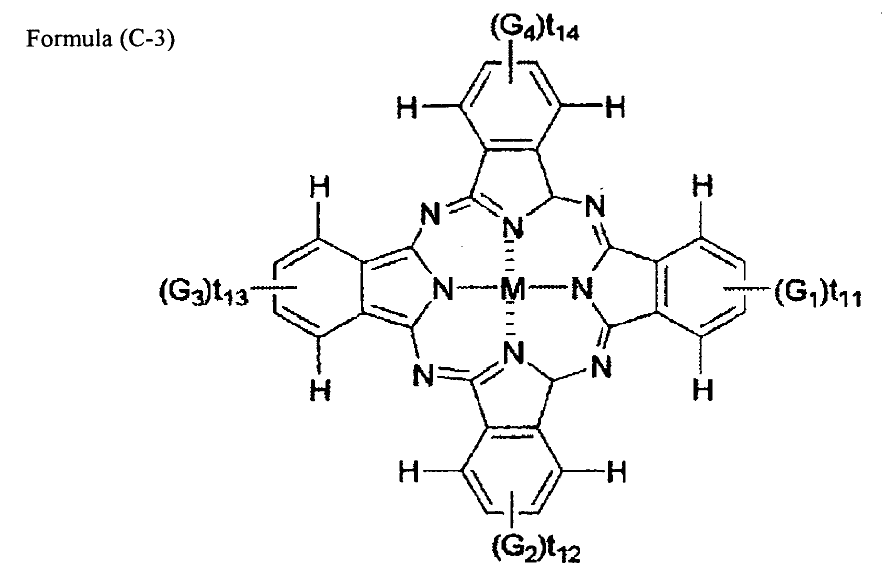

In the formula (C-3), G₁ - G₄ are synonymous with G in the formula (C-1), and preferable groups, particularly preferable groups and most preferable groups are the same as those of G in the formula (C-1). M is synonymous with M in the formula (C). t₁₁ - t₁₄ each represent 1 or 2, and most desirably 1.

In addition, in general, in most cases, the phthalocyanine dye is not a compound having a single structure, but is a mixture of compounds having different chemical structures attributed to the synthesizing method of the phthalocyanine dye, except that the phthalocyanine dye is prepared from a phthalonitrile derivative as a raw material where the substituents on a benzene ring are arranged axisymmetrically. In the invention, the generic term of "phthalocyanine dye" is used for such a mixture inclusive in addition to a phthalocyanine dye with a single structure.
Preferable examples of phthalocyanine dyes include the compounds as recited in the paragraph numbers from [0037] to [0047] of JP-A No. 2005-105261.

Preferable examples of anthrapyridone dyes include the compounds as recited in JP-A No. 2003-192930.
Preferable examples of azo dyes include the compounds as recited in the paragraph numbers from [0049] to [0070] of JP-A No. 2005-105261.

Next, the inkjet recording ink in the invention is explained.
Although the inkjet recording ink is an ink containing the specific compound and dye, the ink contains desirably an aqueous medium to be used for mixing therewith. For example, the inkjet recording ink may be prepared by dissolving the specific compound and a water-soluble dye in the aqueous medium. Further, the ink may contain other additives to the extent that the effect of the invention is not impaired, if needed.
As other additives, known additives include, for example, a drying inhibitor (wetting agent), an anti-fading agent, an emulsion stabilizer, a penetration promoting agent, an ultraviolet absorber, an antiseptic agent, an antifungal agent, a pH adjusting agent, a surface tension adjusting agent, a defoaming agent, a viscosity adjusting agent, a dispersant, a dispersion stabilizer, a rust preventing agent and a chelating agent. These various kinds of additives are directly added to the ink liquid.

The drying inhibitor is suitably used for preventing clogging due to dryness of ink in the ink ejecting outlet of a nozzle used in the inkjet recording system.

As the drying inhibitor, a water-soluble organic solvent having a vapor pressure lower than that of water is desirable. Specific examples of the drying inhibitors include, for example, polyhydric alcohols represented by ethylene glycol, propylene glycol, diethylene glycol, polyethylene glycol, thiodiglycol, dithiodiglycol, 2-methyl-1,3-propanediol, 1,2,6-hexane triol, acetylene glycol derivatives, glycerin and trimethylol propane; lower alkylethers of polyhydric alcohols such as ethylene glycol monomethyl (or ethyl) ether, diethylene glycol monomethyl(or ethyl) ether and triethylene glycol monoethyl (or butyl) ether; heterocyclic compounds such as 2-pyrrolidone, N-methyl-2-pyrrolidone, 1,3-dimethyl-2-imidazolizinone and N-ethyl morpholine; sulfur-containing compounds such as sulfolane, dimethyl sulfoxide and 3-sulfolene; multifunctional compounds such as diacetone alcohol and diethanolamine, and urea derivatives. Among them, polyhydric alcohols such as glycerin and diethylene glycol are more preferable. Further, the drying inhibitors may be used independently and may be used in combination of two or more kinds thereof. These drying inhibitors are contained, preferably in an amount of from 10 % by mass to 50 % by mass in the ink.

The penetration promoting agent is used suitably for the purpose of penetrating the inkjet recording ink to paper. As the penetration promoting agent, alcohols such as ethanol, isopropanol, butanol, di(tri)ethylene glycol monobutyl ether and 1,2-hexanediol; sodium lauryl sulfate and sodium oleate; and nonionic surfactants, may be used. These compounds exert generally sufficient effect, if the compounds are contained in an amount of from 5 % by mass to 30 % by mass in ink, and are preferably used to the extent of the addition amount that print bleed or show through (print through) is not caused.

Ultraviolet absorbers are used for the purpose of enhancing the storability of an image. The ultraviolet absorbers include benzotriazole compounds as recited in JP-A No. Nos. 58-185677, 61-190537, 2-782, 5-197075 and 9-34057; the benzophenone compounds as recited in JP-ANos. 46-2784 and 5-194483, and U.S. Patent No. 3214463; the cinnamic acid compounds as recited in the Japanese Patent Publication (JP-B) Nos. 48-30492 and 56-21141, JP-A No. 10-88106; the triazine compounds as recited in JP-A Nos. 4-298503, 8-53427, 8-239368, 10-182621, and Published Japanese Translation of PCT International Publication of Patent Application No. 8-50129. Further, the compounds as recited in Research Disclosure No.24239, and a compound which absorbs ultraviolet light and emits fluorescent light, i.e., a so-called fluorescent brightener represented by stilbene and benzoxazole compounds, may be also used.

Anti-fading agents are used for the purpose of improving the storability of an image. As the anti-fading agents, various kinds of organic anti-fading agents and metal complex-based anti-fading agents may be used. The organic anti-fading agents include hydroquinones, alkoxyphenols, dialkoxyphenols, phenols, anilines, amines, indans, chromanes, alkoxy anilines and heterocycles. As the metal complexes, a nickel complex and a zinc complex are exemplified. More specifically, the compounds as recited in the clauses from I to J of Section VII of Research Disclosure No.17643, and the compounds as recited in Research Disclosure No. 15162, the compounds as recited in the left column on page 650 of Research Disclosure No. 18716, the compounds as recited on page 527 of Research Disclosure No. 36544, the compounds as recited on page 872 of Research Disclosure No. 307105, the compounds as recited in the patent cited in Research Disclosure No 15162, and compounds included in the general formula and compound examples in the representative compounds as recited on pages 127 - 137 of JP-A No. 62- 215272, may be used.

Examples of the antifungal agents include sodium dehydroacetate, sodium benzoate, sodium pyridinethione-1-oxide, ethyl-p-hydroxybenzoate, 1,2-benzisothiazoline-3-on, and the salts thereof. These antifungal agents are desirably added to ink in an amount of from 0.02% by mass to 1.00% by mass.

A neutralizer (organic base and inorganic alkali) as a pH adjusting agent can be used. The pH adjusting agent is used for the purpose of improving the storability of the inkjet recording ink, and is add to the inkjet recording ink so as to adjust the inkjet recording ink to a pH value of from 6 to 10, and more preferably from 7 to 10.

As a surface tension adjusting agent, a nonionic, cationic, or anionic surfactant can be exemplified.
The surface tension of the inkjet recording ink of the invention is preferably in the range of from 25 mN/m to 70 mN/m, more preferably from 25 mN/m to 60 mN/m, and still more preferably from 28 mN/m to 40 mN/m.
Further, the viscosity of the inkjet recording ink of the invention is preferably adjusted to 30 mPa·s or less, more preferably to 20 mPa·s or less, and still more preferably to 10 mPa·s or less.
Examples of surfactants include anionic surfactants such as a fatty acid salt, an alkyl sulfate, an alkyl benzene sulfonate, an alkyl naphthalene sulfonate, a dialkyl sulfosuccinate, an alkyl phosphoric ester salt, naphthalene sulfonic acid-formalin condensate and a polyoxyethylene alkyl sulfuric ester salt; nonionic surfactants such as polyoxyethylene alkyl ether, polyoxyethylene alkyl allyl ether, polyoxyethylene fatty acid ester, sorbitan fatty acid ester, polyoxyethylene sorbitan fatty acid ester, a polyoxyethylene alkylamine, glycerin fatty acid ester and oxyethylene oxypropylene block copolymer. Further, SURFYNOL ((trade name) manufactured by Air Products and Chemicals Inc.) as an acetylene-based polyoxyethyleneoxide surfactant is also preferably used. Furthermore, an amine oxide type amphoteric surfactant such as N,N-dimethyl-N-alkylamine oxide and the like is also desirable. Moreover, the surfactants as recited on pages 37 - 38 of JP-A No. 59-157636, and the surfactants as recited in Research Disclosure No. 308119 (1989), may also be used.

As the defoaming agent, fluorine-based compounds or silicone-based compounds, chelating agents represented by EDTA may be used, if needed.

As the aqueous medium, a mixture of water as a main component, to which a water-miscible organic solvent is added, may be used, as occasion demands. Examples of the water miscible organic solvents include alcohols (for example, methanol, ethanol, propanol, isopropanol, butanol, isobutanol, sec-butanol, t-butanol, pentanol, hexanol, cyclohexanol and benzyl alcohol), and polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol and thiodiglycol), glycol derivative (for example, ethylene glycol monomethyl ether, ethylene glycol monoethyl ether, ethylene glycol monobutyl ether, diethyleneglycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethyleneglycol monomethyl ether acetate, triethylene glycol monomethyl ether, triethylene glycol monoethyl ether, ethylene glycol monophenyl ether), amines (for example, ethanolamine, diethanolamine, triethanolamine, N-methyl diethanolamine, N-ethyldiethanolamine, morpholine, N-ethylmorpholine, ethylenediamine, diethylene triamine, triethylene tetramine, polyethylene imine, tetramethyl propylene diamine), and other polar solvents (for example, formamide, N,N-dimethyl formamide, N,N-dimethyl acetamide, dimethyl sulfoxide, sulfolane, 2-pyrrolidone, N-methyl-2-pyrrolidone, N-vinyl-2-pyrrolidone, 2-oxazolidone, 1,3-dimethyl- 2-imidazolizinone, acetonitrile and acetone). In addition, two or more kinds of the water miscible organic solvents may be used together.

The content of the dye in the inkjet recording ink is preferably from 0.1 parts by mass to 20 parts by mass, more preferably from 0.5 parts by mass to 15 parts by mass, and particularly preferably from 1.0 parts by mass to 10 parts by mass with respect to 100 parts by mass of the ink.
Further, in the inkjet recording ink in the invention, the dye may be used singly, or may be used in combination of two kinds of dyes. When the dyes are used in combination, it is desirable that total content of the dyes is in the above range.
For example, although the phthalocyanine dye is preferably contained in the inkjet recording ink, the phthalocyanine compound is preferably contained at a ratio of from 0.2 part by mass to 10 parts by mass in100 parts by mass of the ink.

The method of forming an inkjet image of the invention is preferably used for not only monochromatic image formation, but full color image formation. In order to form a full color image, a magenta color tone ink, a cyan color tone ink and a yellow color tone ink may be used, and further in order to control color tone, a black color tone ink may be used.
In the invention, it is desirable that a full color image is formed with the use of an ink set comprising at least yellow, magenta, cyan and black inks, wherein at least one of the inks is the inkjet recording ink containing a colorless water-soluble planar compound having ten or more delocalized pi-electrons in one molecule.

In each of the inks in the ink set, in addition to the phthalocyanine dye according to the invention, other coloring materials (dye or pigment) may be added to improve the image reproducibility.

As a yellow dye usable together with the phthalocyanine dye of the invention, any yellow dyes may be used.
For example, coupling components (henceforth, referred to as coupler component) include phenols, naphthols, anilines, heterocyclic rings such as pyrazolone, pyridone and the like, aryl and heterylazo dyes having an open-chain type active methylene compound; for example, azomethine dyes having an open-chain type active methylene compound as a coupler component; for example, methine dyes such as a benzilidene dye and monomethine oxonol dye; for example, quinone dyes such as a naphthoquinone dye and an anthraquinone dye; and other kinds of dyes such as a quinophthalone dye, a nitro·nitroso dye, an acridine dye and an acridinone dye.

Among them, dyes having a nobler oxidation potential than 1.0 V (vs. SCE) are preferable in view of the image storability. Here, the method of measuring the oxidation potential, and substituent groups effective for raising the oxidation potential are recited in the paragraph numbers from [0030] to [0039] of JP-A No. 2004-331699.
The content of the yellow dye having a nobler oxidation potential than 1.0 V (vs.
SCE) is preferably 50 % or more relative to the whole amount of dyes in the yellow ink.

As usable magenta dyes, any magenta dyes may be arbitrarily used. The magenta dyes include, for example, aryl or heterylazo dyes having phenols, naphthols, anilines and the like as a coupler component; for example, azomethine dyes having pyrazolones, pyrazolotriazoles and the like as a coupler component; for example, methine dyes such as an arylidene dye, a styryl dye, a merocyanine dye, a cyanine dye, an oxonol dye and the like; carbonium dyes such as a diphenyl methane dye, a triphenyl methane dye, a xanthene dye and the like; for example, quinone dyes such as naphthoquinone, anthraquinone, anthrapyridone and the like; and condensed polycyclic dyes such as dioxazine dye and the like.

As usable cyan dyes, any cyan dyes may be arbitrarily used. The cyan dyes include, for example, aryl or heterylazo dyes having phenols, naphthols, anilines and the like as a coupler component; for example, azomethine dyes having phenols, naphthols, heterocles such as a pyrrolotriazole and the like as a coupler component; for example, polymethine dyes such as a cyanine dye, an oxonol dye, a merocyanine dye and the like; carbonium dyes such as a diphenyl methane dye, a triphenyl methane dye, a xanthene dye and the like; phthalocyanine dyes; anthraquinone dyes; indigo-thioindigo dyes and the like.

Each of the above dyes may assume each color of yellow, magenta and cyan only after a part of a chromophore is dissociated, and in such a case, the counter cations may be inorganic cations such as alkali metals, ammonium, or may be organic cations such as pyridinium and quaternary ammonium, or may be further polymer cations having such a cation as a partial structure thereof.
Usable black materials include a dispersion of carbon black in addition to disazo, trisazo, and tetraazo dyes.

The yellow dye having a nobler oxidation potential than 1.0 V (vs. SCE) is preferably the dyes represented by the formula (Y-1):

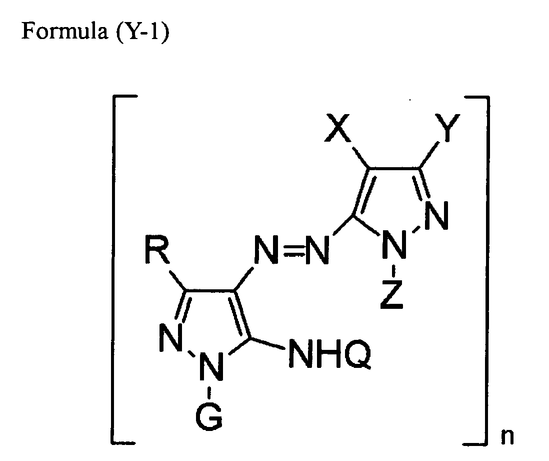

In the formula (Y-1), G represents a heterocyclic group, n represents an integer of 1 - 3. When n is 1, R, X, Y, Z, Q and G each represent a monovalent group. When n is 2, R, X, Y, Z, Q and G each represent a monovalent or divalent substituent, and at least one of R, X, Y, Z, Q and G represents a divalent substituent. When n is 3, R, X, Y, Z, Q and G each represent a monovalent, divalent or trivalent substituent, and at least two of R, X, Y, Z, Q and G represent a divalent substituent, or at least one of R, X, Y, Z, Q and G represents a trivalent substituent.

As desirable examples of the dye represented by the formula (Y-1), the compounds as recited in the paragraph numbers from [0150] to [0470] of JP-A No. 2007-138124 are exemplified.

The magenta dye having a nobler oxidation potential than 1.0 V (vs. SCE) is preferably the dyes represented by the formula (M-1):

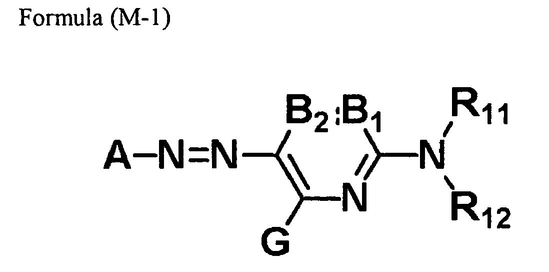

In the formula (M-1), A represents the residue of 5-membered heterocyclic diazo component A-NH₂. B₁ and B₂ represent -CR₁₃= and -CR₁₄=, respectively, or, one of B₁ and B₂ represents a nitrogen atom, and the other represents -CR₁₃= or -CR₁₄=.
R₁₁ and R₁₂ each independently represent a hydrogen atom, an alkyl group, a cycloalkyl group, an alkenyl group, an alkynyl group, an aralkyl group, an aryl group, a heterocyclic group, an acyl group, an alkoxy carbonyl group, an aryloxy carbonyl group, a carbamoyl group, an alkyl sulfonyl group, an aryl sulfonyl group, or a sulfamoyl group.
Each group may further have a substituent.
G, R₁₃ and R₁₄ each independently represent a hydrogen atom, a halogen atom, an alkyl group, an alkenyl group, an alkynyl group, an aralkyl group, an aryl group, a heterocyclic group, a cyano group, a carboxyl group, a carbamoyl group, an alkoxy carbonyl group, an aryloxy carbonyl group, an acyl group, a hydroxyl group, an alkoxy group, an aryloxy group, a silyloxy group, an acyloxy group, a carbamoyloxy group, a heterocyclic oxy group, an alkoxy carbonyloxy group, an aryloxy carbonyloxy group, an amino group substituted with an alkyl group, an aryl group or a heterocyclic group, an acylamino group, an ureido group, a sulfamoyl amino group, an alkoxy carbonylamino group, an aryloxy carbonylamino group, an alkyl and aryl sulfonylamino group, a nitro group, an alkyl and arylthio group, an alkyl and aryl sulfonyl group, an alkyl and arylsulfinyl group, a sulfamoyl group, a heterocyclic thio group, or an ionic hydrophilic group. Each group may be further substituted. Furthermore, R₁₃ and R₁₁, or R₁₁ and R₁₂ may be combined with each other to form a 5 or 6 membered ring. However, the compound represented by the formula (M-1) has at least one ionic hydrophilic group.

As desirable examples of the dyes represented by the formula (M-1), the compounds as recited in the paragraph numbers from [0489] to [0563] of JP-A No. 2007-138124 are exemplified.

Black dyes having a nobler oxidation potential than 1.0V (vs. SCE) are preferably the dyes represented by the formula (B -1);

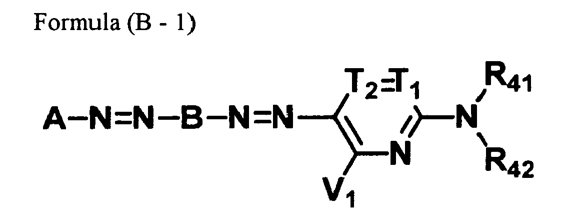

In the formula (B - 1), A and B each independently represent an aromatic group that may be substituted, or a heterocyclic group that may be substituted (A is a monovalent group and B is a divalent group).
T₁ and T₂ each represent =CR₄₃- and -CR₄₄=, or one of T₁ and T₂ represents a nitrogen atom and the other represents =CR₄₃- or -CR₄₄=.
V₁, R₄₃ and R₄₄ each independently represent a hydrogen atom, a halogen atom an alkyl group, an alkenyl group, an alkynyl group, an aralkyl group, an aryl group, a heterocyclic group, a cyano group, a carboxyl group, a carbamoyl group, an alkoxy carbonyl group, an aryloxy carbonyl group, a heterocyclic oxycarbonyl group, an acyl group, a hydroxyl group, an alkoxy group, an aryloxy group, a heterocyclic oxy group, a silyloxy group, an acyloxy group, a carbamoyloxy group, an alkoxy carbonyloxy group, an aryloxy carbonyloxy group, an amino group (including an alkyl amino group, an aryl amino group and a heterocyclic amino group), an acylamino group, an ureido group, a sulfamoyl amino group, an alkoxy carbonyl amino group, an aryloxy carbonyl amino group, an alkyl or aryl sulfonylamino group, a heterocyclic sulfonyl amino group, a nitro group, an alkyl and arylthio group, a heterocyclic thio group, an alkyl and aryl sulfonyl group, a heterocyclic sulfonyl group, an alkyl and arylsulfinyl group, a heterocyclic sulfinyl group, a sulfamoyl group or a sulfo group, and each group may be further substituted.
R₄₁ and R₄₂ each independently represent a hydrogen atom, an alkyl group, an alkenyl group, an alkynyl group, an aralkyl group, an aryl group, a heterocyclic group, an acyl group, an alkoxycarbonyl group, an aryloxycarbonyl group, a carbamoyl group, an alkyl or arylsulfonyl group, and a sulfamoyl group, and each group may have further a substituent. However, R₄₁ and R₄₂ do not do represent a hydrogen atom simultaneously. Furthermore, R₄₃ and R₄₁, or R₄₁ and R₄₂ may combine with each other to form a 5 or 6 membered ring.

As desirable examples of the dyes represented by the formula (B-1), the compounds as recited in the paragraph numbers from [0669] to [0772] ofJP-ANo. 2007-138124 are exemplified.

The above yellow dye, magenta dye, cyan dye and black dye may be used together with other dyes for the purpose of controlling color hue or fading velocity. As desirable examples of dyes to be used together, the compounds as recited in the paragraph numbers from [0473] to [0481] (yellow dyes to be used in combination), in the paragraph numbers from [0570] to [0578] (magenta dyes to be used in combination), in the paragraph numbers from [0660] to [0664] (cyan dyes to be used in combination), and in the paragraph numbers from [0779] to [0792] (black dyes to be used in combination) of JP-A No. 2007-138124 may be exemplified.

Each ink composition in the ink set used for the method of forming an inkjet image of the invention may preferably contain a betaine compound, if necessary, and in particular, a betaine type surfactant having an oil-soluble group is preferable. Among the betaine compounds, the compounds, which will be described later, are preferably used in the invention.

The betaine compound preferably used in the invention is a betaine type surfactant having a surface active function.

Here, the betaine compound refers to a compound having both a cationic moiety and an anionic moiety in a molecule.

As the cationic moiety, an aminic nitrogen atom, a nitrogen atom in a heteroaromatic ring, a boron atom having four bonds with carbon atoms and a phosphorous atom may be exemplified. Among them, the aminic nitrogen atom and the nitrogen atom in a heteroaromatic ring are preferable. In particular, a quaternary nitrogen atom is preferable.

The anionic moiety is preferably a hydroxyl group, a thio group, a sulfonamide group, a sulfo group, a carboxyl group, an imide group, a phosphoric group and phosphonic acid group. Among them, a carboxyl group and a sulfo group are particularly preferable. The electric charge of a molecule as a whole may be any of cationic, anionic and neutral charges, but the neutral charge is desirable.

As the betaine compound, the compound represented by the following formula (W-1) is preferably used.

Formula (W-1) (R)ₚ-N-[L-(COOM)_{q}]ᵣ

In the formula, R represents a hydrogen atom, an alkyl group, an aryl group or a heterocyclic group. L represents a divalent linking group. M represents a hydrogen atom, an alkali metal atom, an ammonium group, a potonated organic amine or a nitrogen-containing heterocyclic group or a quaternary ammonium ion group, and when M is a counter ion for an ammonium ion formed from the N atom in the formula, a group that is not present as a cation. q represents an integer of 1 or more, r represents an integer of 1 to 4, p represents an integer of 0 to 4, and p + r is 3 or 4. When p + r is 4, the N atom becomes a protonated ammonium (=N⁺=). When q is 2 or more, COOM may be the same or different. When r is 2 or more, L-(COOM)q may be the same or different. When p is 2 or more, R may be the same or different.

As preferable examples of the betaine compounds, the compounds as recited in the paragraph numbers from [0810] to [0822] of JP-A No. 2007-138124 may be exemplified.

Although the addition amount of the betaine compound may be in any range to the extent that the effect of the invention is exerted, preferably in the range of from 0.001 % by mass to 50 % by mass, and further preferably in the range of from 0.01 % by mass to 20 % by mass of the ink components.

[Method of Forming Inkjet Image]
The method of forming an inkjet image of the present invention (henceforth also referred to as an inkjet recording method) is a method, in which, using an inkjet recording ink, within 50 milliseconds after a first droplet of the inkjet recording ink impacts on the surface of an image receiving material, a second droplet of the inkjet recording ink is impacted on the surface of the image receiving material at a location where the second and first droplet contact each other, thereby enabling a high speed image formation, and forming an image without bleeding and interference in the image.
From the viewpoint of high speed printing, the time interval from the ejection of the first droplet to the ejection of the second droplet is preferably within 30 milliseconds, and more preferably within 10 milliseconds.
Since the image formation in the present invention is attained by consecutively ejecting ink droplets of the inkjet recording ink onto an image receiving material, the "first dot and second dot" includes two dots formed by being consecutively impinged in an arbitrary time period of the image formation.

As described above, in the inkjet recording method in the invention, energy is applied to the inkjet recording ink to form an image on known image receiving materials, namely, plain paper, resin coated paper, the special paper for inkjet recording as recited in JP-A Nos. 8-169172, 8-27693, 2-276670, 7-276789, 9-323475, 62-238783, 10-153989, 10-217473, 10-235995, 10-217597and 10-337947, film, electrophotographic common paper, fabrics, glass, metal and ceramics. In order to exert the effect of the invention to a maximum extent, the image receiving material, which will be described later, is most preferable.

When forming an image, a polymer latex compound may be used together for the purpose of imparting the glossiness and water resisting property or improving weather-resistance. The time when the latex compound is applied to the image receiving material may be prior to applying a colorant, or after the colorant is applied, even at the same time of applying the colorant. Accordingly, the latex compound may be added to an image receiving paper or added to an ink, or may be used as an independent liquid form of a polymer latex. More specifically, the methods as recited in JP-A Nos. 2002-166638, 2002-121440, 2002-154201, 2002-144696, 2002-80759, 2002-187342 and 2002-172774 may be preferably used.

Hereinafter, image receiving materials such as recording paper and recording film used for forming an inkjet image by using the ink of the invention are explained.
In the method of forming an inkjet image of the invention, it is preferable to use an image receiving material having an ink receiving layer containing porous white inorganic pigment particles on a support.
As the support for the recording paper and the recording film, it is possible to use the supports formed from a chemical pulp such as LBKP or NBKP, mechanical pulp such as GP, PGW, RMP, TMP, CTMP, CMP and CGP, recycled paper such as DIP, and the supports manufactured by various machines such as a fourdrinier paper machine and a cylinder paper machine by optionally adding conventionally known additives such as a pigment, a binder, a sizing agent, a fixing agent, a cationic agent and a strengthening agent.
In addition to these supports, any of synthetic paper and plastic film sheet may be used, and the thickness of the supports is preferably from 10 µm to 250 µm and the basis weight of the supports is preferably 10 g/m²- 250 g/m².
An ink receiving layer and a backcoat layer may be directly provided on the support, or may be provided after the support is subjected to a size pressing with starch or polyvinyl alcohol, or after an anchor coat is provided. Further, the support may be subjected to a flattening treatment with a calendering machine such as a machine calender, a TG calender and a soft calender.
As the support in the invention, paper and plastic film, the both surfaces of which are laminated with polyolefin (for example, polyethylene, polystyrene, polyethylene terephthalate, polybutene, and copolymers thereof), are more preferably used. It is desirable to add white pigment (for example, titanium oxide and zinc oxide) or a coloring dye (for example, cobalt blue, ultramarine blue and neodymium oxide) in polyolefin.

A pigment and an aqueous binder are contained in the ink receiving layer provided on the support.
As the pigment, white pigment is desirable, and examples of the white pigment include white inorganic pigments such as calcium carbonate, kaolin, talc, clay, diatom earth, synthetic amorphous silica, aluminum silicate, magnesium silicate, calcium silicate, aluminum hydroxide, alumina, lithopone, zeolite, barium sulfate, calcium sulfate, titanium dioxide, zinc sulfide and zinc carbonate; and organic pigments such as styrene-based pigment, acrylate-based pigment, urea resin and melamine resin. As white pigment contained in the ink receiving layer, porous white inorganic pigment is preferable, and in particular, synthetic amorphous silica with a large pore area and the like are preferable. As the synthetic amorphous silica, although both of silicic acid anhydride obtained by a dry process, and hydrous silicic acid obtained by a wet process may be used, hydrous silicic acid is desirably used.

As an aqueous binder contained in the ink receiving layer, water-soluble polymers such as polyvinyl alcohol, silanol-modified polyvinyl alcohol, starch, cationated-starch, casein, gelatin, carboxymethyl cellulose, hydroxyethyl cellulose, polyvinyl pyrrolidone, polyalkylene oxide and polyalkylene oxide derivatives; water-dispersible polymers such as styrene/butadiene latex and acrylic emulsion. These aqueous binders may be used singly or two or more kinds thereof may be used in combination. In the invention, polyvinyl alcohol and silanol-modified polyvinyl alcohol are preferable in view of the adhesiveness to pigment and the peeling resistance of the ink receiving layer.
The ink receiving layer may contain a mordant, a water-resistant agent, a light-fastness improving agent, a surfactant and other additives in addition to the pigment and the aqueous binder.

The mordant to be added to the ink receiving layer is preferably immobilized. For the purpose of immobilization, a polymer mordant is preferably used.
The polymer mordants are recited in JP-A Nos.48-28325, 54-74430, 54-124726, 55-22766, 55-142339, 60-23850, 60-23851, 60-23852, 60-23853, 60-57836, 60-60643, 60-118834, 60-122940, 60-122941, 60-122942, 60-235134 and 1-161236, U. S. Patent Nos. 2484430, 2548564, 3148061, 3309690, 4115124, 4124386, 4193800, 4273853, 4282305 and 4450224. In particular, the image receiving materials containing the polymer mordant as recited on pages 212 - 215 of JP-A No. 1-161236 are preferable. When the polymer mordant as recited in this publication is used, the image with an excellent image quality can be obtained, and the light fastness of an image can be improved.

Water-resistant agents are effective for water-resisting an image, and as the water-resistant agent, cationic resins are desirable. Such cationic resins include preferably polyamide polyamine epichlohydrin, polyethyleneimine, polyamine sulfone, dimethyl diallyl ammonium chloride polymer, cationic polyacrylamide, colloidal silica and the like. Among the cationic resins, polyamide polyamine epichlohydrin is particularly preferable. The content of these cationic resins is preferably from 1 % by mass to 15 % by mass, and particularly preferably from 3 % by mass to 10 % by mass, relative to the total solid content of the ink receiving layer.

The light-fastness improving agents include, zinc sulfate, zinc oxide, hindered amine antioxidants, and ultraviolet absorbers such as benzophenone-based and benzotriazole-based ultraviolet absorbers. Among them, zinc sulfate is particularly suitable.

Surfactants function as a coating aid, a peeling property improving agent, a sliding property improving agent or an antistatic agent. The surfactants are recited in JP-A Nos. 62-173463 and 62-183457. Organofluoro compounds may be used as surfactants. The organofluoro compounds are desirably hydrophobic. Examples of the organofluoro compounds include fluorine-based surfactants, oily-fluorine-based compounds (for example, fluorine oil) and solid fluorine compound resins (for example, tetrafluoroethylene resin).
The organofluoro compounds are recited in Publication of Examined Patent Application (JP-B) No. 57-9053 (columns 8 - 17), JP-A Nos. 61-20994, and 62-135826. Other additives that may be added to the ink receiving layer include a pigment dispersing agent, a thickening agent, a defoaming agent, a dye, a fluorescent whitening agent, an antiseptic agent, a pH controlling agent, a matting agent and a hardening agent. In addition, the image receiving layer may be formed of one layer or two layers.

The recording paper and recording film may be provided with a backcoat layer, and components to be added to the backcoat layer include white pigments, aqueous binders or other components. Examples of the white pigments contained in the backcoat layer include white inorganic pigments such as light calcium carbonate, heavy calcium carbonate, kaolin, talc, calcium sulfate, barium sulfate, titanium dioxide, zinc oxide, zinc sulfide, zinc carbonate, satin white, aluminum silicate, diatom earth, calcium silicate, magnesium silicate, synthetic amorphous silica, colloidal silica, colloidal alumina, pseudo-Boehmite, aluminum hydroxide, alumina, lithopone, zeolite, hydrated halloysite, magnesium carbonate and magnesium hydroxide, and organic pigments such as styrene-based plastic pigment, acrylate-based plastic pigment, polyethylene, microcapsule, urea resin and melamine resin.

Examples of the aqueous binder contained in the backcoat include, for example, water-soluble polymers such as styrene/maleate copolymer, styrene/acrylate copolymer, polyvinyl alcohol, silanol-modified polyvinyl alcohol, starch, cationated-starch, casein, gelatin, carboxymethyl cellulose, hydroxyethyl cellulose and polyvinyl pyrrolidone; water-dispersible polymers such as styrene/butadiene latex and acrylic emulsion.
Examples of other components contained in the backcoat layer include a defoaming agent, a foam-suppressing agent, a dye, a fluorescent whitening agent, an antiseptic agent and a water-resistant agent.

Polymer latex may be contained in the constituent layers (including a backcoat layer) of an inkjet recording paper and a recording film. The polymer latex is used for the purpose of improving the layer physical properties such as the dimension stabilization, curling prevention, adhesion prevention and film cracking prevention. Polymer latexes are recited in JP-ANos. 62-245258, 62-136648 and 62-110066. When the polymer latex with a low glass transition temperature (40°C or less) is added to a mordant-containing layer, the crack and curl of the layer can be prevented. Moreover, the curl can be prevented even if the polymer latex with a high glass transition temperature is added to a backcoat layer.

The recording methods using the inkjet recording ink in the invention are not specifically limited, known systems, for example, such as a charge control system in which ink is ejected with the use of en electrostatic attraction force, a drop-on-demand system (pressure pulse system) with the use of the oscillating pressure of a piezoelectric element, an acoustic inkjet system in which ink is ejected utilizing a radiation pressure generated by irradiating an acoustic beam transformed from electric signals to an ink, and a thermal inkjet system with the use of pressure generated by bubbles formed by heating an ink. The inkjet recording systems include a system in which a number of droplets of ink, that is, so-called photo ink having a low concentration with a small volume is ejected, a system in which plural kinds of inks with the same color hue for the purpose of improving image quality and with different concentration with each other are used, or a system with the use of colorless and transparent ink.

According to the invention, ink permeability to the image receiving material can be improved by the addition of compounds having specific structure. The invention comprises the following exemplary embodiments:
< 1 > A method of forming an inkjet image, the method comprising: providing an inkjet recording ink comprising a colorless water-soluble planar compound having ten or more delocalized pi-electrons in one molecule; impacting a first droplet of the inkjet recording ink on a surface of an image receiving material; impacting a second droplet of the inkjet recording ink, within 50 milliseconds after the first droplet on the recording ink impacts on the surface of the image receiving material, on a surface of the image receiving material at a location where the second and the first droplet contact each other.

< 2 > The method of forming an inkjet image according to <1>, wherein, mpacting a first droplet of the inkjet recording ink on a surface of an image receiving material; impacting a second droplet of the inkjet recording ink, within 30 milliseconds after the first droplet on the recording ink impacts on the surface of the image receiving material, on a surface of the image receiving material at a location where the second and the first droplet contact each other.
< 3 > The method of forming an inkjet image according to < 2 >, wherein, impacting a first droplet of the inkjet recording ink on a surface of an image receiving material; impacting a second droplet of the inkjet recording ink, within 10 milliseconds after the first droplet on the recording ink impacts on the surface of the image receiving material, on a surface of the image receiving material at a location where the second and the first droplet contact each other.
< 4 > The method of forming an inkjet image according to any of < 1 > to < 3 >, wherein the inkjet recording ink comprises at least one of a phthalocyanine dye, an anthrapyridone dye, a monoazo dye, a disazo dye, a trisazo dye or a tetrakisazo dye.
< 5 > The method of forming an inkjet image according to any of < 1 > to < 4 >, wherein the water-soluble planar compound has at least two aromatic rings.

< 6 > The method of forming an inkjet image according to any of < 1 > to < 5 >, wherein the water-soluble planar compound is not fluorescent, an absorption peak of the longest wavelength (λmax) of the compound is 350 nm or less, and a molar absorption coefficient of the compound is 10,000 or less.
< 7 > The method of forming an inkjet image according to any of < 1 > to < 6 >, wherein the water-soluble planar compound has a sulfo group.
< 8 > The method of forming an inkjet image according to any of < 1 > to < 7 >, wherein the dye comprised in the inkjet recording ink is a phthalocyanine dye represented by the following formula (C): 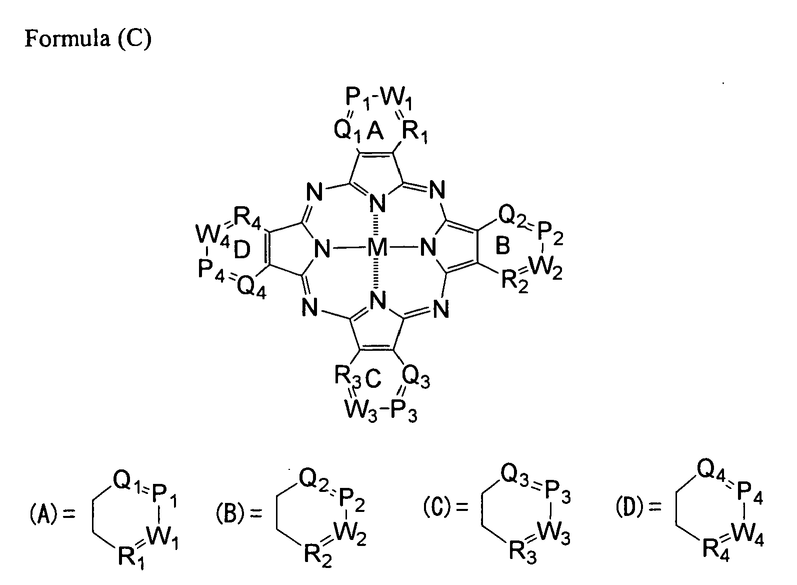 wherein Q₁ - Q₄, P₁ - P₄, W₁ - W₄, and R₁ - R₄, each independently represent (=C(J₁)- or -N=), (=C(J₂)- or -N=), (=C(J₃)- or -N=), or (=C(J₄)- or -N=), J₁ - J₄ each independently represent a hydrogen atom or a substituent, and M represents a hydrogen atom, a metal element, a metal oxide, a metal hydroxide or metal halide.
< 9 > The method of forming an inkjet image according to any of < 1 > to < 8 >, wherein a full color image is formed by using an ink set comprising at least yellow, magenta, cyan and black inks, and at least one of the inks is the inkjet recording ink.
< 10 > The method of forming an inkjet image according to any of < 1 > to < 9 >, wherein an image is formed on the image receiving material and the image receiving material has an ink receiving layer comprising porous white inorganic pigment particles on a support.

### EXAMPLES

Hereinafter, the present invention will be described in more detail with reference to the examples, but the invention is not limited to the examples. Further, "parts" and "%" are expressed in terms of mass, unless otherwise specified.

(Example 1)
[Preparation of Cyan Ink]
(Preparation of Cyan Ink Liquid)
After adding ion exchange water up to one liter to the following components, the solution was heated at 30°C - 40°C with stirring for one hour. Thereafter, the solution was filtered with a microfilter having an average pore size of 0.25 µm under reduce pressure to prepare a cyan ink liquid (C-101).
[Formulation of Cyan Ink Liquid C-101]
(Solid Components)

| | |
|---|---|
| · Cyan dye (Compound No. 154 recited in JP-ANo. 2005-105261) | 54.0 g/l |
| · PROXEL XL-2 ((trade name) manufactured by Avecia Inkjet Limited) | 1.0 g/l |
| (Liquid Components) | |
| · Glycerin | 91 g/l |
| · Triethylene glycol | 18 g/l |
| · Triethylene glycol monobutyl ether | 94 g/l |
| · Propylene glycol | 3 g/l |
| · 1,2-hexane diol | 12 g/l |
| · 2-pyrrolidone | 27 g/l |
| · Urea | 41 g/l |
| · OLFIN E1010 ((trade name) manufactured by Shin-Etsu Chemical Co., Ltd.) | |
| | 10 g/l |

(Preparation of Cyan Ink)
To the cyan ink liquid C-101, was added the following additives such as the specific compound (water-soluble planar compound as a penetration promoting agent and the like), and the cyan inks were prepared as shown in the following table.

**Table 1**

| | Additive | Addition Amount (g/l) |
|---|---|---|
| No. 1 (Comparative) | None | None |
| No. 2 (Comparative) | Sodium quilolinate (Sodium pyridine-2,3-dicarboxylate) | 15 |
| No. 3 (Comparative) | Taurine | 15 |
| No. 4 (Invention) | P-1 (Penetration promoting agent) | 15 |
| No. 5 (Invention) | P-3 (Penetration promoting agent) | 15 |
| No. 6 (Invention) | P-4 (Penetration promoting agent) | 15 |
| No. 7 (Invention) | P-6 (Penetration promoting agent) | 15 |
| No. 8 (Invention) | P-7 (Penetration promoting agent) | 15 |
| No. 9 (Invention) | P-9 (Penetration promoting agent) | 15 |
| No. 10 (Invention) | Sodium α-naphthoate | 15 |
| No. 11 (Invention) | Lithium naththalene-1,5-disulfonate | 15 |

(Image Recording)
Dry Minilab 400 ink cartridge manufactured by Fujifilm Corporation was filled with these cyan inks, recording was performed using inkjet recording roll paper ((GASAI) (trade name) manufactured by Fujifilm Corporation under the condition of 23°C and 50 % RH.

At this time, recording was performed in such a manner that the size of ink droplets ejected from the ink head was 2pl, and the contact time of the two adjacent ink droplets with each other was set to 50 ms, 30 ms and 10 ms, respectively, and the following evaluations were performed.

(Evaluation) The images obtained in the above were observed under an optical microscope at 100-fold magnification, and evaluated according to the following criteria. The obtained results are shown in the following table.
- Evaluation Criteria -
A : Adjacent dots form independently in circular shapes, respectively, and have the same shape as the dot impacted independently;
B: Slight coalescence and bleeding and interference were observed between adjacent dots, and;
C: Adjacent dots were completely coalesced.

**Table 2**

| | Ejection interval until adjacent two ink dots come in adjacent contact with each other | | | Remarks |
|---|---|---|---|---|
| | 50 ms | 30 ms | 10 ms | |
| No. 1 | C | C | C | Comparative |
| No. 2 | C | C | C | Comparative |
| No. 3 | C | C | C | Comparative |
| No. 4 | A | A | A | Invention |
| No. 5 | A | A | A | Invention |
| No. 6 | A | A | A | Invention |
| No. 7 | A | A | A | Invention |
| No. 8 | A | A | A | Invention |
| No. 9 | A | A | A | Invention |
| No. 10 | A | A | B | Invention |
| No. 11 | A | A | B | Invention |

From the results shown in the above table, when the cyan inks to which the specific compounds as water-soluble planar compounds that are the specific compound (penetration promoting agents) of the invention are added, the bleeding and interference can be prevented, even if a high speed recording is performed, and it is apparent that the cyan inks of the invention are superior to those of comparative cyan inks. Further, it is found that the invention is excellent in the image quality and the clearness of the image.

It is confirmed that the same effect as the above effect can be exerted, when the water-soluble planar compounds as the specific compound are used in combination with dyes of yellow, magenta, cyan and black inks (azo dye, polyazo dye, and the like).

(Example 2)

### (Evaluation with Full Color Image)

Dry Minilab 400 ink cartridge manufactured by Fujifilm Corporation was filled with No. 5 cyan ink, and the cartridges for yellow, magenta and black inks accessory to the machine were used, and portraits and landscapes were printed using inkjet recording roll paper ((GASAI) (trade name) manufactured by Fujifilm Corporation under the condition of 23°C and 50 % RH, in such a manner that the size of ink droplets ejected from the ink heads was 2pl, and the contact time of the adjacent two ink droplets with each other was set to 10 ms (the present invention).
For comparison, images were printed in a manner similar to the above except for No. 1 cyan ink was used.
As the result of visual assessment of the obtained images, although images with quite smooth graininess were obtained by the image forming method according to the present invention, in contrast, coarse images were obtained in the comparative examples. The difference between the invention and comparative examples was apparent.

According to the present invention, a method of forming an inkjet image capable of forming an image without occurrence of bleeding and interference, in particular, exerting a remarkable effect of the invention at the time of high speed printing.

## Claims

1. A method of forming an inkjet image, the method comprising:
providing an inkjet recording ink comprising a colorless water-soluble planar compound having ten or more delocalized pi-electrons in one molecule;
impacting a first droplet of the inkjet recording ink on a surface of an image receiving material;
impacting a second droplet of the inkjet recording ink, within 50 milliseconds after the first droplet on the recording ink impacts on the surface of the image receiving material, on a surface of the image receiving material at a location where the second and the first droplet contact each other.

2. The method of forming an inkjet image according to claim 1, wherein, impacting a first droplet of the inkjet recording ink on a surface of an image receiving material; impacting a second droplet of the inkjet recording ink, within 30 milliseconds after the first droplet on the recording ink impacts on the surface of the image receiving material, on a surface of the image receiving material at a location where the second and the first droplet contact each other.

3. The method of forming an inkjet image according to claim 2, wherein, impacting a first droplet of the inkjet recording ink on a surface of an image receiving material; impacting a second droplet of the inkjet recording ink, within 10 milliseconds after the first droplet on the recording ink impacts on the surface of the image receiving material, on a surface of the image receiving material at a location where the second and the first droplet contact each other.

4. The method of forming an inkjet image according to claim 1, wherein the inkjet recording ink comprises at least one of a phthalocyanine dye, an anthrapyridone dye, a monoazo dye, a disazo dye, a trisazo dye or a tetrakisazo dye.

5. The method of forming an inkjet image according to claim 1, wherein the water-soluble planar compound has at least two aromatic rings.

6. The method of forming an inkjet image according to claim 1, wherein the water-soluble planar compound is not fluorescent, an absorption peak of the longest wavelength (λmax) of the compound is 350 nm or less, and a molar absorption coefficient of the compound is 10,000 or less.

7. The method of forming an inkjet image according to claim 1, wherein the water-soluble planar compound has a sulfo group.

8. The method of forming an inkjet image according to claim 4, wherein the dye comprised in the inkjet recording ink is a phthalocyanine dye represented by the following formula (C): Formula (C) 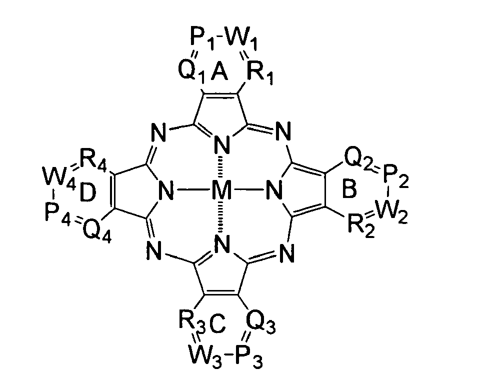 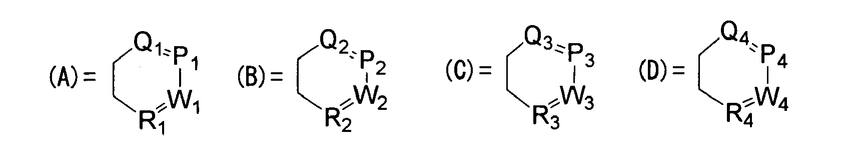 wherein Q₁ - Q₄, P₁ - P₄, W₁- W₄, and R₁ - R₄, each independently represent (=C(J₁)- or -N=), (=C(J₂)- or -N=), (=C(J₃)- or -N=), or (=C(J₄)- or -N=), J₁ - J₄ each independently represent a hydrogen atom or a substituent, and M represents a hydrogen atom, a metal element, a metal oxide, a metal hydroxide or metal halide.

9. The method of forming an inkjet image according to claim 1, wherein a full color image is formed by using an ink set comprising at least yellow, magenta, cyan and black inks, and at least one of the inks is the inkjet recording ink.

10. The method of forming an inkjet image according to claim 1, wherein an image is formed on the image receiving material and the image receiving material has an ink receiving layer comprising porous white inorganic pigment particles on a support.
